(19) Europäisches Patentamt / European Patent Office / Office européen des brevets

(11) **EP 3 439 349 B1**

(12) **EUROPEAN PATENT SPECIFICATION**

(45) Date of publication and mention of the grant of the patent:
**25.08.2021 Bulletin 2021/34**

(51) Int Cl.:
*H04W 24/02* *(2009.01)*    *H04W 16/10* *(2009.01)*
*H04W 24/08* *(2009.01)*    *H04W 84/12* *(2009.01)*

(21) Application number: **17183945.9**

(22) Date of filing: **31.07.2017**

(54) **METHOD, SYSTEM AND A COMPUTER PROGRAM PRODUCT FOR MONITORING THE OPERATION OF A WIRELESS ACCESS POINT**

VERFAHREN, SYSTEM UND COMPUTERPROGRAMMPRODUKT ZUR ÜBERWACHUNG DES BETRIEBS EINES DRAHTLOSEN ZUGANGSPUNKTS

PROCÉDÉ, SYSTÈME ET PRODUIT-PROGRAMME INFORMATIQUE POUR SURVEILLER LE FONCTIONNEMENT D'UN POINT D'ACCÈS SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.02.2019 Bulletin 2019/06**

(73) Proprietor: **Nokia Solutions and Networks Oy 02610 Espoo (FI)**

(72) Inventors:
• **Atawia, Ramy**
  **2018 Antwerpen (BE)**
• **Perenda, Erma**
  **2018 Antwerpen (BE)**
• **Gacanin, Haris**
  **2018 Antwerpen (BE)**

(74) Representative: **IP HILLS NV**
**Hubert Frère-Orbanlaan 329**
**9000 Gent (BE)**

(56) References cited:
KR-A- 20070 018 779    US-A1- 2005 153 667
US-A1- 2015 312 008    US-A1- 2017 006 479

• **NOGUEIRA JOÃO ET AL: "Channel Selection Relying on Probabilistic Adjacent Channel Interference Analysis and Pattern Recognition", WIRELESS PERSONAL COMMUNICATIONS, SPRINGER, DORDRECHT, NL, vol. 86, no. 3, 30 July 2015 (2015-07-30), pages 1333-1357, XP035935757, ISSN: 0929-6212, DOI: 10.1007/S11277-015-2992-Z [retrieved on 2015-07-30]**

## Description

### Technical Field

Embodiments of the invention relate to the field of monitoring the operation of a wireless access point in a wireless network, and in particular to a method, a system and a computer program product for monitoring the operation of a wireless access point, wherein the wireless access point is operating on at least one of a plurality of available wireless operating channels and in a wireless network comprising a plurality of wireless access points.

### Background

Wireless networks, for example generally known wireless network technologies such as Wi-Fi based on the IEEE 802.11 standards, are widely used for indoor and outdoor wireless data services. Such exemplary Wi-Fi networks according to IEEE 802.11 standards allow operation on a plurality of wireless operating channels. For example, most modern implementations allow for a dual mode operation on the 2.4 GHz and 5 GHz bands, in which the 2.4 GHz (802.11b/g/n) band typically provides for fourteen wireless operating channels, and in which the 5 GHz (802.11a/h/j/n/ac) band provides for a much larger number of wireless operating channels.

Such a wireless network typically comprises a plurality of wireless access points, also referred to as WAP or AP. Such an AP typically is configured to connect wireless user equipment devices, also referred to as UE, to a wired network. In this way, an AP functions to establish a data connection between wireless user equipment devices and other network devices, for example via a local area network and/or wide area network such as for example the internet.

The number of such installed wireless networks is growing. Additionally, Wireless Network Operators are densifying their existing private wireless networks with community based wireless network deployments, which make available a large number of shared wireless access points to their end users. In this way, the wireless network operators aim to provide broadband wireless network services with a uniform quality of service or QoS, as the densification of such wireless networks means that sufficient coverage is guaranteed from a sufficiently large number of wireless access points spread along the desired geographical area.

However, such an increase of the number of wireless access points operating in a wireless network leads to problems, with respect to monitoring the operation of such wireless access points in function of the optimization of the operation of the wireless access points. In prior art systems, the wireless network operator is able to monitor and manage a plurality of the wireless access points by means of a coupled network management system, such APs being referred to as managed APs. However, these managed APs will typically operate in a wireless network comprising several unmanaged network devices, such as for example unmanaged APs which are not coupled to the network management system. Such unmanaged network devices, could for example be APs of other network operators or end users, etc, which will be referred to as unmanaged APs. It is clear that due to lack of coordination between managed APs and unmanaged neighbouring APs, the configuration of the wireless network might be suboptimal.

Therefore such prior art methods and systems for monitoring and optimizing wireless access points operating in such a wireless network are suboptimal. For example, prior art Wi-Fi optimization methods aim to maximize particular key performance indicators KPIs have been proven to be suboptimal because these methods do not take into account a context in which the wireless network is subjected to unmanaged external influences. When, for example, such prior art monitoring and optimization methods are executed in a dense, multi-operator Wi-Fi networks, which are subjected to varying user demands and channel hopping or dynamic assignment, this will cause a stochastic and highly dynamic wireless network environment. In such cases, monitoring and evaluating the wireless network environment will be slow, difficult, unreliable and will consume a lot of resources, leading to a negative impact on the end user experience. In this way neighbouring APs of wireless networks, such as for example APs of different Wi-Fi networks managed by different network operators, particularly when these Wi-Fi networks operate on the same or adjacent wireless operating channels, have an increased risk of being configured suboptimally, thereby leading to a reduced throughput and quality of service.

Prior art methods and systems for monitoring and optimizing wireless access points, for example rely on Wi-Fi scan functionality available at the APs to monitor the wireless network usage and in this way learn about the configuration of neighbouring APs operating in the wireless network. However, such prior art methods lead to noticeable service interruptions and for example IEEE 802.11 protocol-inherited delays. Such prior art methods which are based on Wi-Fi scan functionality available at the APs, further are not easily scalable, especially when taking into account that such wireless networks typically not only comprise a plurality of APs, but also a plurality of other wireless network nodes such as for example wireless extenders or wireless repeaters which are configured to extend the range of an existing wireless network. Such wireless extenders can also be referred to as EXT. It is clear to a man skilled in the art that wireless networks employing such wireless extenders are more prone to degradation from interference from neighbouring access points that border portions of the extended network and which are operating on the same channel as the wireless network in which the wireless extender operates. Further, typically such prior art methods for monitoring wireless access points also require the interruption of the connection of the AP with all connected end user equipments and/or EXTs.

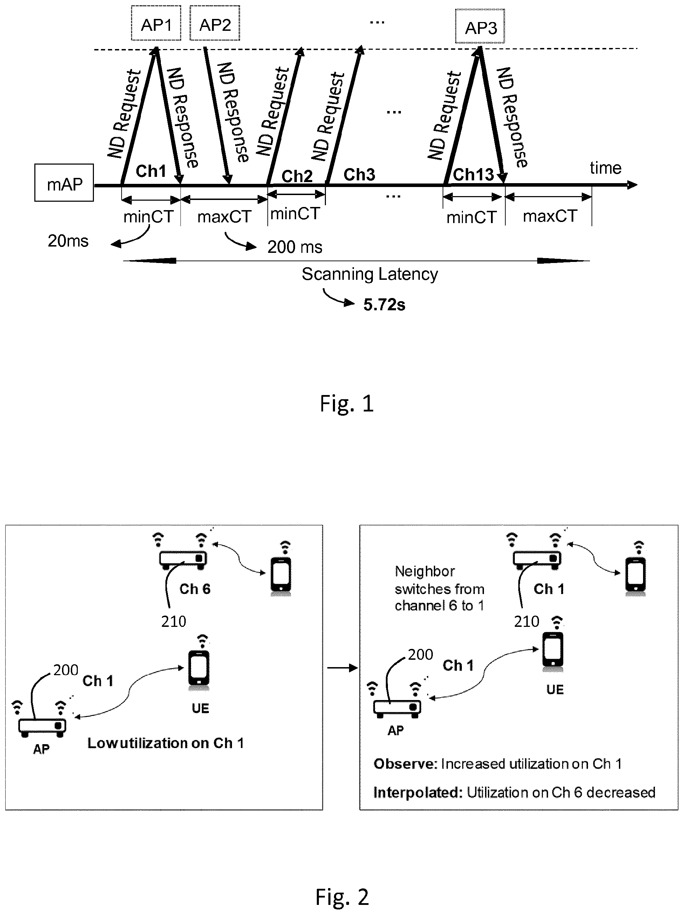

As shown in more detail with reference to Figure 1, in a Wi-Fi network, for example an IEEE 802.11 network, a wireless access point can execute a discovery process in order to monitor the wireless network in which it is operating, and more particularly to detect neighbouring access points and/or other devices operating in the Wi-Fi network and determine the wireless operating channels in which they are currently operating. As shown in Figure 1, and known to a man skilled in the art, during such an embodiment of a method for monitoring wireless access points in a wireless network, a managed wireless access point, referred to as mAP, probes wireless operating channels, referred to as Ch1, Ch2, ... , Ch13, by broadcasting neighbour discovery requests, referred to as ND request, and waiting for responses, referred to as ND responses, of other wireless access points, referred to as AP1, AP2, ..., AP13, or any other wireless device. As known to a man skilled in the art, the IEEE 802.11 standard defines two timers, namely MinChannelTime or MinCT and MaxChannelTime or MaxCT, which determine the time mAP, after sending a request for a particular wireless operating channel during the discovery process shown in Figure, needs to wait for a response. MinCT determines the maximum time to wait for a first response, for example from another AP operating on this particular wireless operating channel. If no response is within the time period determined by MinCT, mAP will establish that the wireless operating channel is unused, and will continue the monitoring method for a further wireless operating channel. As shown in Figure 1, mAP first sends the request for Ch1, then Ch2 and so on until finally with Ch13, all available wireless operating channels have been provided with requests. As further shown in Figure 1, in the case that a response is received within the MinCT time period after a request, for example as shown for wireless operating channel 1, in which mAP receives a response from AP1 within the MinCT time period, then mAP waits up to MaxCT for further responses from other wireless access points and/or other wireless network nodes operating on this particular wireless operating channel. As further shown in the embodiment of Figure 1, as known to a man skilled in the art, such a discovery process of the monitoring method is thus further characterized by a parameter referred to as the full scanning latency, which is the time period needed to scan all available wireless operating channels of the wireless network one after the other in whatever order. As shown in Figure 1, when MinCT is for example 20ms and MaxCT is for example 200ms, this may result for the embodiment shown in a full scanning latency of 5,72s. It is clear that such a latency will be noticeable to the users of the wireless network.

Still further prior art methods for monitoring wireless access points, for example rely on mobile applications, for example installed on end user equipments, that can be used by the user to for example scan the Wi-Fi channels of a Wi-Fi network. However, this typically requires an end user to repeat such scanning at different locations, and further to repeat this scanning procedure during use of the Wi-Fi network, as the neighboring Wi-Fi network typically changes the optimality of scanned channels, when for example an AP of the neighboring Wi-Fi network switches to an overlapping network operating channel or the data traffic on a particular network operating channel increases. Such a monitoring method is unreliable and no longer feasible in the context of wireless networks comprising a dense deployment of APs and EXTs. Additionally, end user equipments are only able to monitor signal measurements, such as signal strength, etc. and are not able to monitor information relating to the data traffic load.

A further prior art method is for example known from US 2017/006479 which discloses a method for selection of operating parameters for a wireless access point. This document discloses a method in which a channel metric history is analysed to identify correlations between channel metric measurements and various timeframes. Still a further prior art method is for example known from KR 2007 0018779 which discloses a wireless communication method and system for optimizing channel selection for an access point. This document discloses a method for invoking a channel optimization process during a period of low load of the access point. During this channel optimization process it is determined if a new channel is more suitable by calculating a predicted channel load for each channel based on high system load measurements.

The problems mentioned above are specifically relevant for embodiments of methods and systems for monitoring wireless access points in embodiments of wireless networks, such as for example an indoor Wi-Fi network comprising one or more managed wireless access points or mAPs, one or more managed Extenders or EXTs, one or more unmanaged wireless access points APs, and/or one or more user equipments or UEs. According to such embodiments, as is clear to the man skilled in the art, the mAPs and corresponding EXTs can be coupled by means of a suitable network link referred to as backhaul, and the EXTs and UEs can be coupled by means of a suitable network link referred to as fronthaul. In order to monitor the current state of the wireless network with respect to backhaul and fronthaul links, in such a case, in prior art solutions, there is a need to evaluate all the available wireless operating channels at as many of the network nodes as possible, such as: mAPs, EXTs, UEs. This typically leads to an exhaustive monitoring scheme which is not feasible in practice. It has been found during experiments at a single location with 1 mAP, 1 EXT and 1 UE on a 2.4GHz Wi-Fi band comprising 11 channels, it takes more than 12 hours to perform a prior art monitoring method that is able to collect sufficient measurements on all the channels at this single location. Further, as explained above with respect to Figure 1, the service interruption delay caused by the full scanning latency of each of the discovery phases of such a Wi-Fi scan is a function of EXT location with respect to the mAP, the number of neighboring unmanaged APs, the number of available channels, etc. Still further, when for example the backhaul link between the mAP and its corresponding EXTs is poor, this can introduce still further delays caused when assembling the data of the EXTs at the mAP, whereby the user perceived scanning latency can increase still further to unacceptable levels.

Therefore, there remains a need for a system and method for monitoring of such a wireless network such that the optimality of the current network state can be determined with respect to the current configuration. There further remains the need for such a system and method for monitoring of such a wireless network in which user experienced quality of service can be maintained while obtaining measurements, especially when the number of wireless operating channels is large. There thus still remains a need for a system and method for monitoring or learning such a wireless network in a more efficient way, with a reduced impact on the user experience.

## Summary

The present invention includes a monitoring system according to claim 1, a monitoring method according to claim 6 and a computer program product according to claim 11. Further embodiments are defined in the dependent claims. According to a first aspect of the invention there is provided a monitoring system (100) configured to monitoring the operation of wireless access point (200), wherein the wireless access point (200) is operating on at least one of a plurality of available wireless operating channels in a wireless network comprising a plurality of wireless access points, wherein the monitoring system (100) comprises a measurement module (110), a correlation module (120) and a knowledge module (130), configured such that: during a learning phase:

- the measurement module (110) measures performance parameters of the wireless operating channel currently used by the wireless access point without service interruption and, if no users are connected to the wireless access point and/or users connected to the wireless access point are using non-realtime implications, the measurement module (110) also measures performance parameters of other wireless operating channels than the one currently used;
- the correlations module (120) determines correlations between the measured performance parameters of the plurality of different wireless operating channels, when said plurality of different wireless operating channels have been measured by the measurement module; and
- the knowledge module (130) stores said correlations, and

wherein the monitoring system (100) further comprises an estimation module (140) configured such that: during a prediction phase:

- the estimation module (140) estimates the performance of wireless operating channels of the plurality of different wireless operating channels other than the wireless operating channel currently used by the wireless access point (200) by means of retrieval of the stored correlations in the knowledge module (130) in function of the measurements of the measurement module (110).

In this way, a monitoring system is realized which solves the above mentioned problems, by avoiding exhaustive searching and sensing of all wireless operating channels and by minimizing the delays and user service interruptions as present in the prior art. The correlation module and the knowledge module assure that over time and without undue interruption of the user service a good assessment of the performance parameters of the different wireless operating channels used by the wireless access point can be determined. The minimized delays of the monitoring system even assure that this performance assessment of the operating channels is more up to date than could be achieved with prior art methods as described.

By making the assessment in function of the current measurements of the performance parameters by the measurement module it can be assured that an optimal performance assessment can be made without any undue delay. In this way the risk for making a performance assessment based on outdated information is reduced.

In the monitoring system, the measurement module (110) is configured such that: during the learning phase:

- if no users are connected to the wireless access point and/or users connect to the wireless access point are using non-realtime applications, the measurement module (110) also measures performance parameters of other wireless operating channels than the one currently used.

In this way the measuring module is able to aggregate in an optimal way, without undue interruption of the user service or noticeable delays, sufficient information for the correlation module to reliably build, grow and update the correlations between the performance parameters of all wireless operating channels.

According to a further embodiment, there is provided a monitoring system, wherein the measured performance parameters comprise one or more of the following:

- Channel Utilization;
- average data rate.

Such performance parameters allow to establish reliable correlations about the current performance state of the wireless network.

According to a further embodiment, there is provided a monitoring system, wherein the monitoring system (100) is further configured such that:

during the prediction phase:

- the measurement module (110) measures the performance parameters of the currently used wireless operating channel of the wireless access point;
- the measurement module (110) monitors changes in the measured performance parameters;
- the measurement module (110) triggers the estimation module (140) to initiate said estimations of the performance parameters of wireless operating channels other than the wireless operating channel currently used by the wireless access point, if said monitored changes in the measured performance parameters exceed a predetermined threshold.

In this way, the configuration of the wireless access point is efficiently and without delay adjusted to assure an optimal performance when the state or utilization of the wireless network is changed, and the adjustment can be based on performance parameters that allow for a more reliable assessment of the wireless operating channels for the current operating conditions without introducing interruptions in the user service.

According to a further embodiment, there is provided a monitoring system, wherein said correlations determined by the correlation module (120) comprise one or more of the following:

- spatial correlations;
- spectral correlations;
- temporal correlations.

In this way the knowledge base is provided with reliable information to provide for a reliable prediction for every type of monitored change in the currently used wireless operating channel.

According to a further embodiment, there is provided a monitoring system, wherein the wireless access point (200) is couplable via a backhaul link (210) to one or more wireless extenders (220), which are couplable via a fronthaul link (230) to one or more wireless user equipments (240), and wherein the measurement module (110) is further configured such that:

- the measurement module also measures performance parameters of the wireless operating channel currently used by the wireless extenders (220) and/or the wireless user equipments (240) without service interruption.

The monitoring system is especially advantageous in such a setup of the wireless network as the delays and service interruptions at every level of the wireless network, such as the wireless access point, the wireless extenders, the user equipments and their respective backhaul and fronthaul links are reduced as much as possible, while a reliable performance assessment at each of these levels of the wireless network remains available.

According to a second aspect of the invention there is provided a monitoring method for monitoring the operation of wireless access point, wherein the wireless access point is operating on at least one of a plurality of available wireless operating channels in a wireless network comprising a plurality of wireless access points, wherein the method comprises the following steps:

during a learning phase:

- measuring performance parameters of the wireless operating channel currently used by the wireless access point without service interruption by a measurement module and, if no users are connected to the wireless access point and/or users connected to the wireless access point are using non-realtime applications, also measuring performance parameters of other wireless operating channels than the one currently used by the measurement module;
- determining correlations between the measured performance parameters of the plurality of different wireless operating channels by a correlation module, when said plurality of different wireless operating channels have been measured by the measurement module; and
- storing said correlations in a knowledge module, and

during a prediction phase:

- estimating the performance of wireless operating channels of the plurality of different wireless operating channels other than the wireless operating channel currently used by the wireless access point by means retrieval of the stored correlations in the knowledge module in function of the measurements of the measurement module.

In this way, a monitoring method assures by means of the correlations between the currently used wireless operating channel and the other wireless operating channels it is possible to monitor the operation of the wireless access point without undue interruption of the user service. The minimized delays of the monitoring further assure that this performance assessment of the operating channels is more up to date and reliable than could be achieved with prior art methods as described.

By making the assessment in function of the current measurements of the performance parameters by the measurement module it can be assured that an up to date performance monitoring can be performed. In this way, the risk for making a performance assessment based on outdated information is reduced.

The method comprises the following steps:

during the learning phase:

- if no users are connected to the wireless access point and/or users connect to the wireless access point are using non-realtime applications, also measuring, by the measurement module, performance parameters of other wireless operating channels than the one currently used.

In this way, the measurement of the performance parameters of as many wireless operating channels as possible is assured, without undue interruption of the user service or noticeable delays. This allows to reliably build, grow and update the correlations between the performance parameters of all wireless operating channels for the knowledge module as quickly and reliably as possible.

According to still a further embodiment, there is provided a monitoring method, wherein the measured performance parameters comprise one or more of the following:

- Channel Utilization;
- average data rate.

Such performance parameters allow to establish reliable correlations about the current performance state of the wireless network.

According to still a further embodiment, there is provided a monitoring method, wherein the method comprises the following further steps:

during the prediction phase:

- measuring the performance parameters of the currently used wireless operating channel of the wireless access point by the measurement module;
- monitoring changes in the measured performance parameters;
- initiating said estimations of the performance parameters of wireless operating channels other than the wireless operating channel currently used by the wireless access point, if said monitored changes in the measured performance parameters exceed a predetermined threshold.

In this way, the configuration of the wireless access point is only changed when it is needed. If no change to the performance of the wireless network is detected, there is no need to change an optimal operating state. However as soon as a clear change in the performance parameters of the currently used operating channel is detected, this might indicate a change in the performance state of the overall wireless network. In such a case, the method assures an efficient adjustment to maintain an optimal performance.

According to still a further embodiment, there is provided a monitoring method, wherein said correlations determined by the correlation module comprise one or more of the following:

- spatial correlations;
- spectral correlations;
- temporal correlations.

In this way, the knowledge base is able to provide sufficient information to base reliable predictions for every type of monitored change in the currently used wireless operating channel.

According to still a further embodiment, there is provided a monitoring method, wherein the wireless access point is couplable via a backhaul link to one or more wireless extenders, which are couplable via a fronthaul link to one or more wireless user equipments, and wherein the method comprises the further step of:

- measuring performance parameters of the wireless operating channel currently used by the wireless extenders and/or the wireless user equipments without service interruption by a measurement module.

In this way a reliable, up to date and complete performance assessment of such a wireless network becomes possible, even in a network context in which one or more wireless access points, one or more wireless extenders, one or more user equiments are operated which are not couplable to the monitoring system, for example because they are operated by another network operator.

According to a third aspect of the invention, there is provided a computer program product comprising computer-executable instructions for performing the method according to the second aspect of the invention, when the program is run on a computer.

## Brief Description of the Drawings

Exemplary embodiments will now be described in further detail by means of the accompanying drawings:

- Figure 1 shows a prior art embodiment a monitoring method and the associated full scanning latency;
- Figure 2 shows an embodiment of a spatial correlation between wireless operating channels;
- Figure 3 shows an embodiment of such spatial correlations as stored in the knowledge base;
- Figure 4 shows an embodiment of a spectral correlation between wireless operating channels;
- Figure 5 shows an embodiment of a learning phase of the monitoring method; and
- Figure 6 shows an embodiment of a prediction phase of the monitoring method;
- Figure 7 shows an alternative embodiment of the monitoring method;
- Figure 8 shows an embodiment of the monitoring system and the wireless network.

## Detailed Description of Embodiment(s)

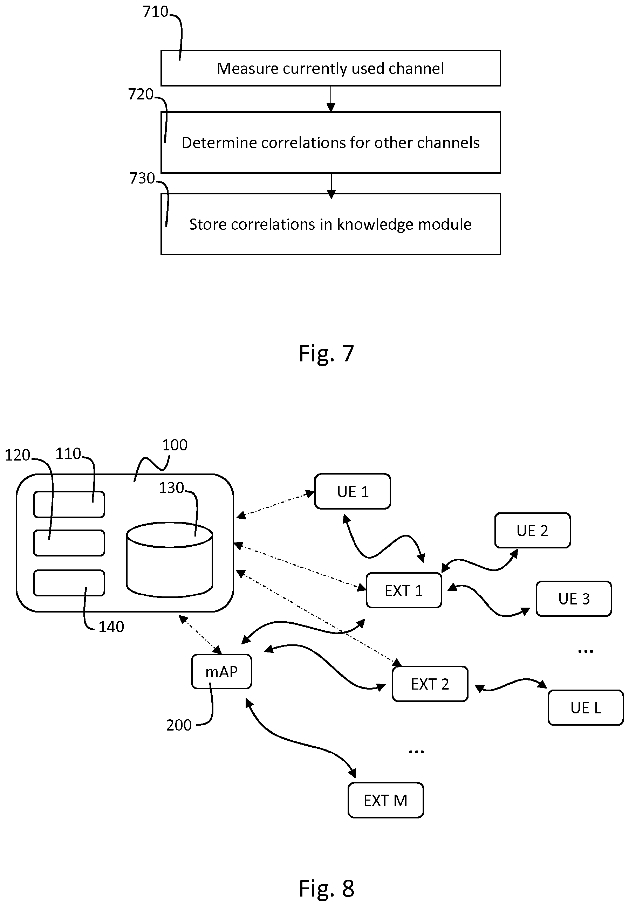

Although the embodiments of the monitoring method and system described below are also advantageous in any suitable wireless network comprising at least one wireless access point, they are particularly advantageous in a dense wireless network comprising a plurality of wireless access points and several other network nodes, which are not all couplable to the monitoring system. According to a particular exemplary embodiment of such a dense wireless network, as for example shown in Figure 8, the wireless network comprises a wireless mesh network that comprises at least one static managed or master access point or mAP 200. The location of such an mAP is typically static. According to such an embodiment mAP is couplable to a plurality of wireless extenders, for example M wireless extenders or EXT via a backhaul link. Typically, the locations of such wireless extenders is changeable over time. According to the embodiment on which the description below is based the wireless network further comprises a plurality of user equipments or UEs, for example L UEs operated by users of services of the wireless network, which for example are couplable via a front haul link to the EXTs. As already mentioned above the wireless network, such as for example a Wi-Fi network comprises a plurality of wireless operating channels, for example N wireless operating channels from which the wireless access point and/or the available channels are to be selected. mAP and/or each of the EXTs or UEs are equipped with R radio interfaces, where each radio is assigned to one channel. In this way, the embodiment of the wireless network is providing services to L UEs that are couplable the mAP either directly or via the EXT.

As further shown in Figure 8 the managed access points and some of the other nodes of the wireless network, such as EXTs or UEs are coupled to a monitoring system 100. Although being illustrated as a remote component, the monitoring system 100 can also be part of the mAP or its functionality can be spread at least partially amongst one or more of the managed network nodes of the wireless network such as for example mAPs, Exts, UEs, etc. As further shown in Figure 8, the embodiment of the monitoring system 100 comprises a measurement module 110, a correlations module 120, a knowledge module 130 and an estimation module 140 of which the operation will be explained in more detail below. The monitoring system 100 is suitably coupled to allow the monitoring of the operation of the wireless access point 200. It is clear that the wireless access point 200 as described above is operating on at least one of a plurality of available wireless operating channels in a wireless network comprising a plurality of other wireless access points (not shown).

Generally, the operation of the different modules of the monitoring system 100, during a learning phase, is illustrated in Figure 7. During step 710 the measurement module 110 measures performance parameters of the wireless operating channel currently used by the wireless access point without service interruption. During step 720 the correlations module 120 determines correlations between the measured performance parameters of the plurality of the wireless operating channels, when said plurality of wireless operating channels have been measured by the measurement module.

During step 730 the knowledge module 130 stores said correlations. It is clear that the different modules of the monitoring system are suitable couplable in order to allow the exchange of the required data.

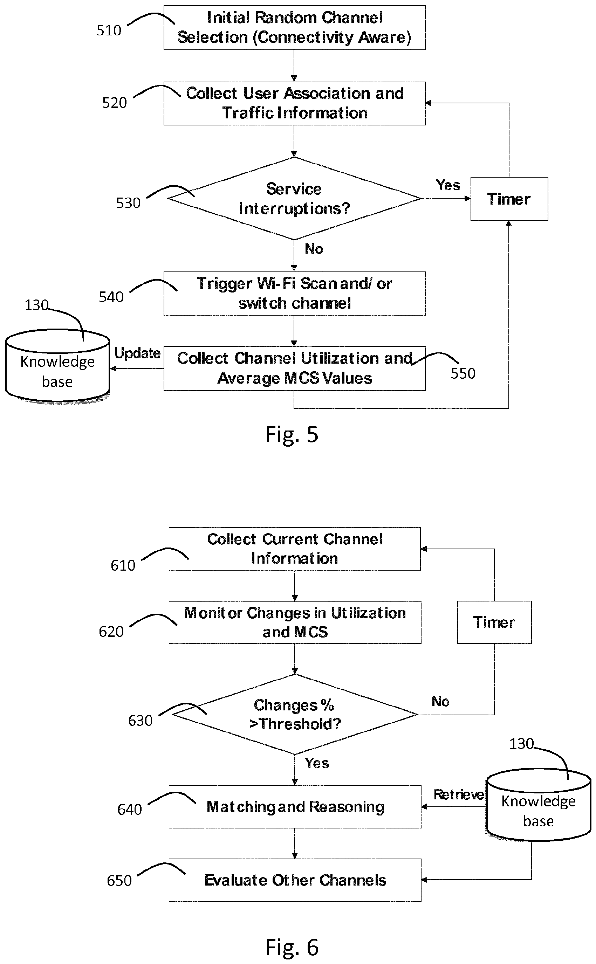

A further embodiment of the monitoring method performed by the monitoring system 100 during a learning phase, is illustrated in Figure 5. During this learning phase, the measurements collected by the monitoring system 100 without interruption of the user service are used to populate the knowledge module 130. As shown, according to this embodiment during step 510 an initialization step is performed. A random network operating channel is chosen for both a managed AP and a managed EXTs for which the monitoring system is able to collect performance parameters. To establish and maintain connectivity between the managed AP and its EXT, the backhaul link of the EXT is configured to be the same as the managed AP.

During the next step 520, according to this embodiment, there is performed a user-aware sensing: If there are no UEs connected to the EXT, a Wi-Fi scan is performed and all the performance parameters of all wireless operating channels information are collected. When UEs are connected to the EXT, the amount and type of traffic is checked, and if only non-real time data traffic is observed during step 530, a Wi-Fi scan can be performed during step 540 whereby the performance parameters of all wireless operating channels of the wireless network are measured during step 550 for storage in the knowledge module 130.

According to a particular embodiment the abovementioned two states can be checked by making use the following two conditions, as can be easily implemented by a man skilled in the art:

- Number of Users (L):
  Device.Wi-Fi.AccessPoint.{i}.AssociatedDeviceNumberOfEntries.
- Real-Time Traffic (R):
  Device.Wi-Fi.AccessPoint.{i}.AC.{l}.Stats.OutQLenHistogram (for AC = BE, BG and VO)
- Total Traffic (T) :
  Device. Wi-Fi.AccessPoint.{i}.AssociatedDevice.{j}.Stats. BytesSent

No UE are connected when L equals 0 or T equals 0. Non-real-time data traffic is observed when R<R'. In this way scanning of different network operating channels can be performed without impacting users.

It is clear that still further alternative embodiments are possible, but in general it is advantageous when embodiments of the monitoring system 100 comprise a measurement module 110 that is further configured such that, during the learning phase, if no users are connected to the wireless access point and/or users connect to the wireless access point are using non-realtime applications, the measurement module 110 also measures performance parameters of other wireless operating channels than the one currently used.

Although, alternative embodiments exist, preferably the measured performance parameters by the measurement module 110 are the Channel Utilization and the average data rate as will be explained in more detail below. According to the embodiment described below, the data rate will be determined in function of the average modulation and coding scheme or MCS. According to the embodiment shown, during step 540, the Wi-Fi scan will typically collect information about the wireless operating channel such as:

- Channel Index (h) = $Device.Wi\text{-}Fi.NeighboringWi\text{-}FiDiagnostic.Result.\{i\}.\ Channel;$

- Channel Utilization (Uh) =

$$\left\lfloor \frac{channel\ busy\ time}{dot11ChannelUtilizationBeaconIntervals\ \times\ dot11BeaconPeriod\ \times\ 1024} \times 255 \right\rfloor$$

where Channel Busy Time is defined as the total number of microseconds during which the Channel Select mechanism observed that the wireless operating channel was busy between predefined beacon intervals referred to as Dot11ChannelUtilizationBeaconIntervals.

According to still a further embodiment, in order to obtain information about the wireless operating channel at the side of the UEs, the wireless operating channel of the mAP or EXT can be measured such that the modulation and coding scheme or MCS of the associated UEs can be averaged:

- MCS(Ch) =

  mean(Device.Wi-Fi.AccessPoint.{i}.AssociatedDevice.{j}.LastDataDownlinkRate)

This averaged MCS provides an indication of the average data rate.

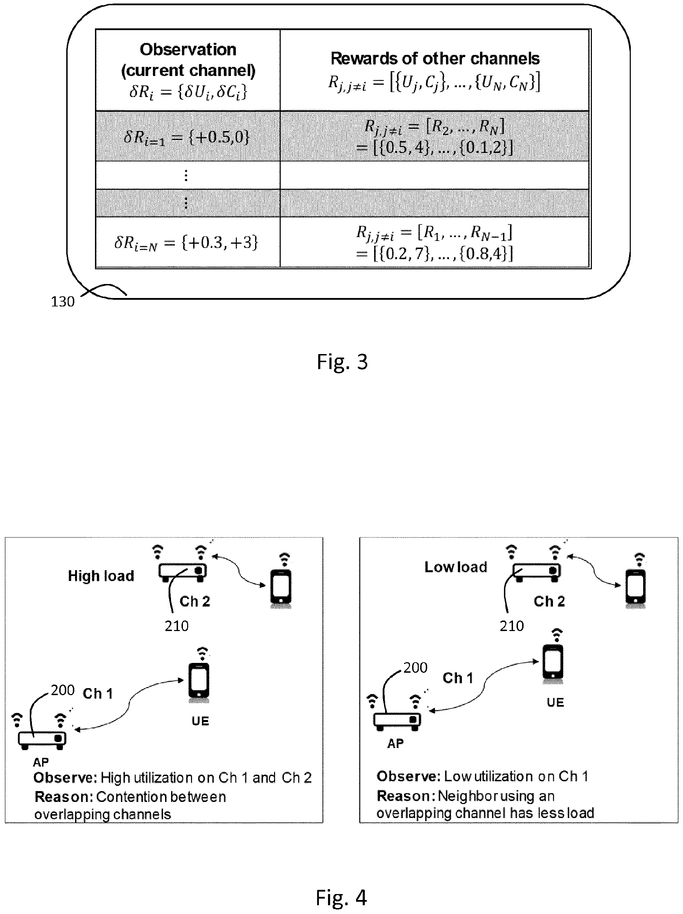

According to the embodiment shown in Figure 5, now the measured performance parameters can be correlated by the correlation module 120 so that the resulting correlations can be stored into the knowledge module 130. According to a particular embodiment, the knowledge module 130 could aggregate for and/or at each wireless network node, such as mAPs, EXTs, ...a knowledge base about all the possible network operating channels using the information collected in the above-mentioned steps. An exemplary embodiment of a knowledge base comprised by the knowledge module 130, making use of spatial correlation, will be illustrated by means of Figures 2 and 3 and use of spectral correlation will be illustrated by means of Figure 4. However it is clear that alternative embodiments are possible, such as for example in which the correlation module 120 makes use of one or more of the following: spatial correlations, spectral correlations, temporal correlations, etc..

The embodiment of spatial correlation, as shown in Figure 2, is performed by the correlation module 120, and refers to the changes in the channel utilization and the average data rate, such as for example determined in function of the averaged MCS as described above. This spatial correlation can for example be determined as a result of a change in the load or channel of a neighbouring, unmanaged AP 210 of the managed AP 200 as shown in Figure 2. The Channel Utilization of network operating channel 1 used by the managed AP 200, in the use case shown, has increased, due to contention, when the neighbouring unmanaged AP 210 that switches from channel 6 to channel 1. In such an exemplary use case, the utilization of network operating channel 6 is also decreased. The correlation module 130 is able to detect this correlation in both changes and stores this spatial correlation in the knowledge module 130 in the form of a knowledge base, of which the contents is schematically shown in Figure 3. In this way, as will be explained in further detail below, the stored correlations will allow the monitoring system, during a prediction phase, to make use of the previously stored correlation based on such correlated changes in the Channel Utilization of both network operating channel 1 and network operating channel 6 to predict the Channel Utilization of both network operating channels 1 and 6, while only measuring the Channel Utilization on one of these two channels, so that the user service provided by the wireless network must not be interrupted to measure the other one.

The embodiment of spectral correlation, as shown in Figure 4, is performed by the correlation module 120, and refers to the correlated changes in the Channel Utilization due to changes in the data traffic load of the neighbouring APs 200, 210 operating in a spectral overlapping network operating channel. Figure 4 illustrates an example in which the Channel Utilization of network operating channel 1 of AP 200 changes because of the neighbouring AP 210 operates on an overlapping network operating channel, i.e. network operating channel 2, and is experiencing a decreased load. Such correlated change can be detected, even if, the Channel Utilization of both network operating channels is substantially the same, for example if both APs are impacted by the same dense wireless network neighbourhood context.

Below is an example of a correlation of the Channel Utilization on channels 1, 2 and 6:

- 

$$u_{1\_ef} = u_{1,real} + u_{2,real} + u_{3,real} + u_{4,real} + u_{5,real}$$

- 

$$u_{2\_ef} = u_{1,real} + u_{2,real} + u_{3,real} + u_{4,real} + u_{5,real} + u_{6,real} = u_{1\_ef} + u_{6,real}$$

- 

$$u_{6\_ef} = u_{2,real} + u_{3,real} + u_{4,real} + u_{5,real} + u_{6,real} + u_{7,real} + u_{8,real} + u_{9,real} + u_{10,real} = u_{4\_ef} + u_{9,real} + u_{10,real} - u_{1,real}$$

The value of the Channel Utilization of network operating channel 1: $u_{1\_ef}$ and the Channel Utilization of network operating channel 2: $u_{2\_ef}$, only differs by the Channel Utilization of network operating channel 6, which according to the exemplary embodiment described above overlaps with channel 2 only. According to this embodiment, in case of zero or very low load on network operating channel 6, both the Channel Utilizations of network operating channels 1 and 2 will be the same. It is thus clear that, by means of these correlations, the measurements of only network operating channel 1 and network operating channel 6 will be able to provide for a reliable estimation or prediction of Channel Utilization on other channels such as network operating channel 2 during a prediction phase or interpolation phase of the monitoring method by means of the estimation module 140. The estimation module 140 of the monitoring system 100 in this way will be enabled to make use of these spectral correlations stored in the knowledge module 130 and will be able to reliably and with undue delay estimate the Channel Utilization of other network operating channels than the network operating channel currently in use, thereby avoiding the need to switch the AP to different network operating channels during execution of the monitoring method in a way that would result in interruption of user services. It is further clear that, this also allows to construct and update the knowledge base of the knowledge module 130 in a shorter time period and with less switching between different network operating channels, thereby allowing for a reliable monitoring of the performance parameters even in high load scenarios and/or where users are making use of network services during prolonged time periods which cannot tolerate delays or interruptions.

Figure 6 illustrates an embodiment of an interpolation or prediction phase of the monitoring method as performed by the estimation module 140 of the monitoring system 100. It is clear that alternative embodiments are possible, in which the estimation module 140 estimates the performance of wireless operating channels other than the wireless operating channel currently used by the wireless access point 200 by means of retrieval of the stored correlations in the knowledge module 130 in function of the measurements of the measurement module 110. According to the exemplary embodiment shown in Figure 6, the flow chart shows the prediction phase in which, the monitoring system 100 only monitors the performance parameters of the network operating channel on the managed AP is currently operating. As will be described in more detail below, the monitoring system 100, then uses the knowledge base of the knowledge module to evaluate the performance parameters of other network operating channels.

During step 610, the monitoring system 100, by means of the measurement module 110 continuously measures the performance parameters of the managed AP, such as the Channel Utilization U and the average data rate, using MCS, of the currently used channel without interruptions, similar as described above. According to the embodiment shown, the measurement module 110 measures these performance parameters periodically and calculates the difference over the measurement time intervals during step 620:

$$\delta U_c = \frac{(U_{c,t} - U_{c,t-\delta t})}{\delta t}$$

$$\delta MCS_c = \frac{(MCS_{c,t} - MCS_{c,t-\delta t})}{\delta t}$$

A positive value of $\delta U_c$ indicates that the current network operating channel is congested. Similarly, a negative value of $\delta MCS_c$ indicates an interference on the current network operating channel, e.g. from another unmanaged AP. Both aforementioned conditions, at step 630, provide for a trigger which allows the measurement module 110 to trigger the estimation module 140, to evaluating the performance parameters of other network operating channels in an attempt to determine a more performant or the most performant network operating channel under the current network operating conditions.

As further shown, according to the embodiment of Figure 6, during the prediction phase of the monitoring method, there is performed a Matching and Reasoning step 640 by the estimation module upon being trigger by the measurement module 110 as described above. During this step the current sensed changes in the performance parameters, as represented by vector $s = [\delta U_c, \delta MCS_c]$ is compared against the previously observed cases in the knowledge base of the knowledge module, this means the first column in Figure 4. Such a comparison or matching with the entries in the knowledge base of the knowledge module can for example be performed by making use of Euclidian distance $d_{s,x}$, and retrieval of the K most matching cases, this means, according to the embodiment shown, retrieval of the second column in Figure 4, which in this way provides the potential performance improvements for other network operating channels than the one being currently measured by the measurement module 110. $d_{s,q}$ represents the Euclidian distance between the sensed vector of the performance parameters s and the observation vector of case x.

Subsequently the estimation module will proceed to a Zero-Cost Channel Prediction step 650. Based on the retrieval of the K most matching cases from the knowledge base of the knowledge module 130, the estimation module 140 is able to make a prediction of the network performance parameters. According to a particular embodiment the network operating channel with the highest reward can then be determined by means of the network operating channel comprising the highest performance parameters, as determined by means of a reward: $R_{j,k}$ which denotes the rewards vector $[U_{j,k}, MCS_{j,k}]$ of channel j in case $k \in K$. According to an exemplary embodiment the total reward value of channel j is for example a weighted sum of the k cases:

$$\overline{R}_j = \sum_k (1 - U_{j,k}) * \frac{1}{1 + d_{s,k}} * MCS_{j,k}$$

It is however clear that further alternative embodiments exist than the one described with reference to Figure 6 in which during the prediction phase, the measurement module 110 measures the performance parameters of the currently used wireless operating channel of the wireless access point. The measurement module 110 then monitors changes in the measured performance parameters and triggers the estimation module 140 to initiate the estimations of the performance parameters of wireless operating channels other than the wireless operating channel currently used by the wireless access point, if said monitored changes in the measured performance parameters exceed a predetermined threshold.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A monitoring system (100) configured to monitor the operation of at least one wireless access point (200), wherein the wireless access point (200) is operating on at least one of a plurality of available wireless operating channels in a wireless network comprising a plurality of wireless access points, wherein the monitoring system (100) comprises a measurement module (110), a correlation module (120) and a knowledge module (130), configured such that: during a learning phase:

   - the measurement module (110) is configured to measure performance parameters of the wireless operating channel currently used by the wireless access point without service interruption and, if no users are connected to the wireless access point and/or users connected to the wireless access point are using non-realtime implications, the measurement module (110) is configured to also measure performance parameters of other wireless operating channels than the one currently used;
   - the correlations module (120) is configured to determine correlations between the measured performance parameters of a plurality of different wireless operating channels, when said plurality of different wireless operating channels have been measured by the measurement module; and
   - the knowledge module (130) is configured to store said correlations, and wherein the monitoring system (100) further comprises an estimation module (140) configured such that: during a prediction phase:

      - the estimation module (140) is configured to estimate the performance of wireless operating channels of the plurality of different wireless operating channels other than the wireless operating channel currently used by the wireless access point (200) by means of retrieval of the stored correlations in the knowledge module (130) in function of the measurements of the measurement module (110).

2. A monitoring system according to any of the claims 1, wherein the measured performance parameters comprise one or more of the following:

   - Channel Utilization;
   - average data rate

3. A monitoring system according to any of the claims 1 to 2, wherein the monitoring system (100) is further configured such that:
   during the prediction phase:

      - the measurement module (110) is configured to measure the performance parameters of the currently used wireless operating channel of the wireless access point;
      - the measurement module (110) is configured to monitor changes in the measured performance parameters;

- the measurement module (110) is configured to trigger the estimation module (140) to initiate said estimations of the performance parameters of wireless operating channels of the plurality of different wireless operating channels other than the wireless operating channel currently used by the wireless access point, if said monitored changes in the measured performance parameters exceed a predetermined threshold.

4. A monitoring system according to any of the claims 1 to 3, wherein said correlations determined by the correlation module (120) comprise one or more of the following:

- spatial correlations;
- spectral correlations;
- temporal correlations.

5. A monitoring system according to any of the claims 1 to 4, wherein the wireless access point (200) is couplable via a backhaul link (210) to one or more wireless extenders (220), which are couplable via a fronthaul link (230) to one or more wireless user equipments (240), and wherein the measurement module (110) is further configured to also measure performance parameters of the wireless operating channel currently used by the wireless extenders (220) and/or the wireless user equipments (240) without service interruption.

6. A monitoring method for monitoring the operation of at least one wireless access point, wherein the wireless access point is operating on at least one of a plurality of available wireless operating channels in a wireless network comprising a plurality of wireless access points, wherein the method comprises the following steps:
during a learning phase:

- measuring performance parameters of the wireless operating channel currently used by the wireless access point without service interruption by a measurement module and, if no users are connected to the wireless access point and/or users connected to the wireless access point are using non-realtime applications, also measuring performance parameters of other wireless operating channels than the one currently used by the measurement module (110);
- determining correlations between the measured performance parameters of plurality of different wireless operating channels by a correlation module, when said plurality of different wireless operating channels have been measured by the measurement module; and
- storing said correlations in a knowledge module, and
during a prediction phase:

- estimating the performance of wireless operating channels of the plurality of different wireless operating channels other than the wireless operating channel currently used by the wireless access point by means retrieval of the stored correlations in the knowledge module in function of the measurements of the measurement module.

7. A monitoring method according to claim 6, wherein the measured performance parameters comprise one or more of the following:

- Channel Utilization;
- average data rate

8. A monitoring method according to any of the claims 6 to 7, wherein the method comprises the following further steps:
during the prediction phase:

- measuring the performance parameters of the currently used wireless operating channel of the wireless access point by the measurement module;
- monitoring changes in the measured performance parameters;
- initiating said estimations of the performance parameters of wireless operating channels of the plurality of different wireless operating channels other than the wireless operating channel currently used by the wireless access point, if said monitored changes in the measured performance parameters exceed a predetermined threshold.

9. A monitoring method according to any of the claims 6 to 8, wherein said correlations determined by the correlation module comprise one or more of the following:

- spatial correlations;
- spectral correlations;
- temporal correlations.

10. A monitoring method according to any of the claims 6 to 9, wherein the wireless access point is couplable via a backhaul link to one or more wireless extenders, which are couplable via a fronthaul link to one or more wireless user equipments , and wherein the method comprises the further step of:

- measuring performance parameters of the wireless operating channel currently used by the wireless extenders and/or the wireless user equipments without service interruption by a measurement module.

11. A computer program product comprising computer-executable instructions causing a monitoring system to perform the steps of the method of any one of the claims 6 to 9, when the instructions are run on a computer associated with the monitoring system.


**Patentansprüche**

1. Überwachungssystem (100), das dazu ausgelegt ist, den Betrieb von mindestens einem drahtlosen Zugangspunkt (200) zu überwachen, wobei der drahtlose Zugangspunkt (200) auf mindestens einem von einer Vielzahl von verfügbaren drahtlosen Betriebskanälen in einem drahtlosen Netzwerk, das eine Vielzahl von drahtlosen Zugangspunkten umfasst, betrieben wird, wobei das Überwachungssystem (100) ein Messmodul (110), ein Korrelationsmodul (120) und ein Wissensmodul (130) umfasst, die derart ausgelegt sind, dass:
während einer Lernphase:

- das Messmodul (110) dazu ausgelegt ist, Leistungsparameter des drahtlosen Betriebskanals, der derzeit vom drahtlosen Zugangspunkt verwendet wird, ohne Dienstunterbrechung zu messen, und, wenn keine Benutzer mit dem drahtlosen Zugangspunkt verbunden sind und/oder Benutzer, die mit dem drahtlosen Zugangspunkt verbunden sind, Nicht-Echtzeitanwendungen verwenden, das Messmodul (110) dazu ausgelegt ist, auch Leistungsparameter von anderen drahtlosen Betriebskanälen als dem derzeit verwendeten zu messen;
- das Korrelationsmodul (120) dazu ausgelegt ist, Korrelationen zwischen den gemessenen Leistungsparametern einer Vielzahl von verschiedenen drahtlosen Betriebskanälen zu messen, wenn die Vielzahl von verschiedenen drahtlosen Betriebskanälen vom Messmodul gemessen wurden; und
- das Wissensmodul (130) dazu ausgelegt ist, die Korrelationen zu speichern, und

wobei das Überwachungssystem (100) ferner ein Schätzmodul (140) umfasst, das derart ausgelegt ist, dass:
während einer Vorhersagephase:

- das Schätzmodul (140) dazu ausgelegt ist, mittels Abruf der gespeicherten Korrelationen im Wissensmodul (130) in Funktion der Messungen des Messmoduls (110) die Leistung von anderen drahtlosen Betriebskanälen der Vielzahl von verschiedenen drahtlosen Betriebskanälen als dem drahtlosen Betriebskanal, der derzeit vom drahtlosen Zugangspunkt (200) verwendet wird, zu schätzen.

2. Überwachungssystem nach einem der Ansprüche 1, wobei die gemessenen Leistungsparameter eines oder mehreres von Folgendem umfassen:

- Kanalnutzung;
- durchschnittliche Datenrate.

3. Überwachungssystem nach einem der Ansprüche 1 bis 2, wobei das Überwachungssystem (100) ferner derart ausgelegt ist, dass:
während der Vorhersagephase:

- das Messmodul (110) dazu ausgelegt ist, die Leistungsparameter des derzeit verwendeten drahtlosen Betriebskanals des drahtlosen Zugangspunkts zu messen;
- das Messmodul (110) dazu ausgelegt ist, Änderungen bei den gemessenen Leistungsparametern zu überwachen;
- das Messmodul (110) dazu ausgelegt ist, das Initiieren der Schätzungen der Leistungsparameter von anderen drahtlosen Betriebskanälen der Vielzahl von verschiedenen drahtlosen Betriebskanälen als dem drahtlosen Betriebskanal, der derzeit vom drahtlosen Zugangspunkt verwendet wird, durch das Schätzmodul (140) auszulösen, wenn die überwachten Änderungen bei den gemessenen Leistungsparametern einen vorbestimmten Schwellwert überschreiten.

4. Überwachungssystem nach einem der Ansprüche 1 bis 3, wobei die Korrelationen, die vom Korrelationsmodul (120) bestimmt werden, eines oder mehreres von Folgendem umfassen:

   - räumliche Korrelationen;
   - spektrale Korrelationen;
   - zeitliche Korrelationen.

5. Überwachungssystem nach einem der Ansprüche 1 bis 4, wobei der drahtlose Zugangspunkt (200) via eine Backhaulverbindung (210) an einen oder mehrere drahtlose Extender (220) koppelbar ist, die via eine Fronthaulverbindung (230) an eine oder mehrere drahtlose Teilnehmereinrichtungen (240) koppelbar sind, und wobei das Messmodul (110) ferner dazu ausgelegt ist, auch Leistungsparameter des drahtlosen Betriebskanals, der derzeit von den drahtlosen Extendern (220) und/oder den drahtlosen Teilnehmereinrichtungen (240) verwendet wird, ohne Dienstunterbrechung zu messen.

6. Überwachungsverfahren zum Überwachen des Betriebs von mindestens einem drahtlosen Zugangspunkt, wobei der drahtlose Zugangspunkt auf mindestens einem von einer Vielzahl von verfügbaren drahtlosen Betriebskanälen in einem drahtlosen Netzwerk, das eine Vielzahl von drahtlosen Zugangspunkten umfasst, betrieben wird, wobei das Verfahren die folgenden Schritte umfasst:
   während einer Lernphase:

   - Messen von Leistungsparametern des drahtlosen Betriebskanals, der derzeit vom drahtlosen Zugangspunkt verwendet wird, ohne Dienstunterbrechung durch ein Messmodul, und, wenn keine Benutzer mit dem drahtlosen Zugangspunkt verbunden sind und/oder Benutzer, die mit dem drahtlosen Zugangspunkt verbunden sind, Nicht-Echtzeitanwendungen verwenden, auch Messen von Leistungsparametern von anderen drahtlosen Betriebskanälen als dem derzeit verwendeten durch das Messmodul (110);
   - Bestimmen von Korrelationen zwischen den gemessenen Leistungsparametern einer Vielzahl von verschiedenen drahtlosen Betriebskanälen durch ein Korrelationsmodul, wenn die Vielzahl von verschiedenen drahtlosen Betriebskanälen vom Messmodul gemessen wurden; und
   - Speichern der Korrelationen in einem Wissensmodul und während einer Vorhersagephase:
   - Schätzen der Leistung von anderen drahtlosen Betriebskanälen der Vielzahl von verschiedenen drahtlosen Betriebskanälen als dem drahtlosen Betriebskanal, der derzeit vom drahtlosen Zugangspunkt verwendet wird, mittels Abruf der gespeicherten Korrelationen im Wissensmodul in Funktion der Messungen des Messmoduls.

7. Überwachungsverfahren nach Anspruch 6, wobei die gemessenen Leistungsparameter eines oder mehreres von Folgendem umfassen:

   - Kanalnutzung;
   - durchschnittliche Datenrate.

8. Überwachungsverfahren nach einem der Ansprüche 6 bis 7, wobei das Verfahren die folgenden Schritte umfasst:
   während der Vorhersagephase:

   - Messen der Leistungsparameter des derzeit verwendeten drahtlosen Betriebskanals des drahtlosen Zugangspunkts durch das Messmodul;
   - Überwachen von Änderungen bei den gemessenen Leistungsparametern;
   - Initiieren der Schätzungen der Leistungsparameter von anderen drahtlosen Betriebskanälen der Vielzahl von verschiedenen drahtlosen Betriebskanälen als dem drahtlosen Betriebskanal, der derzeit vom drahtlosen Zugangspunkt verwendet wird, wenn die überwachten Änderungen bei den gemessenen Leistungsparametern einen vorbestimmten Schwellwert überschreiten.

9. Überwachungsverfahren nach einem der Ansprüche 6 bis 8, wobei die Korrelationen, die vom Korrelationsmodul bestimmt werden, eines oder mehreres von Folgendem umfassen:

- räumliche Korrelationen;
- spektrale Korrelationen;
- zeitliche Korrelationen.

**10.** Überwachungsverfahren nach einem der Ansprüche 6 bis 9, wobei der drahtlose Zugangspunkt via eine Backhaulverbindung an einen oder mehrere drahtlose Extender koppelbar ist, die via eine Fronthaulverbindung an eine oder mehrere drahtlose Teilnehmereinrichtungen koppelbar sind, und wobei das Verfahren den folgenden Schritt umfasst:

- Messen von Leistungsparametern des drahtlosen Betriebskanals, der derzeit von den drahtlosen Extendern und/oder den drahtlosen Teilnehmereinrichtungen verwendet wird, ohne Dienstunterbrechung durch ein Messmodul.

**11.** Computerprogrammprodukt, das computerausführbare Anweisungen umfasst, die ein Überwachungssystem veranlassen, die Schritte des Verfahrens von einem der Ansprüche 6 bis 9 durchzuführen, wenn die Anweisungen auf einem Computer ausgeführt werden, der mit dem Überwachungssystem verknüpft ist.


**Revendications**

**1.** Système de surveillance (100) configuré pour surveiller le fonctionnement d'au moins un point d'accès sans fil (200), dans lequel le point d'accès sans fil (200) fonctionne sur au moins l'un d'une pluralité de canaux de fonctionnement sans fil disponibles dans un réseau sans fil comprenant une pluralité de points d'accès sans fil, dans lequel le système de surveillance (100) comprend un module de mesure (110), un module de corrélation (120) et un module de connaissance (130), configuré de sorte que :
pendant une phase d'apprentissage :

- le module de mesure (110) est configuré pour mesurer des paramètres de performance du canal de fonctionnement sans fil actuellement utilisé par le point d'accès sans fil sans interruption de service et, si aucun utilisateur n'est connecté au point d'accès sans fil et/ou si des utilisateurs connectés au point d'accès sans fil utilisent des applications non en temps réel, le module de mesure (110) est configuré pour mesurer également des paramètres de performance d'autres canaux de fonctionnement sans fil que celui actuellement utilisé ;
- le module de corrélations (120) est configuré pour déterminer des corrélations entre les paramètres de performance mesurés d'une pluralité de différents canaux de fonctionnement sans fil, lorsque ladite pluralité de différents canaux de fonctionnement sans fil ont été mesurés par le module de mesure ; et
- le module de connaissance (130) est configuré pour stocker lesdites corrélations, et

dans lequel le système de surveillance (100) comprend en outre un module d'estimation (140) configuré de sorte que :
pendant une phase de prédiction :

- le module d'estimation (140) est configuré pour estimer les performances de canaux de fonctionnement sans fil de la pluralité de différents canaux de fonctionnement sans fil autres que le canal de fonctionnement sans fil actuellement utilisé par le point d'accès sans fil (200) au moyen de la récupération des corrélations stockées dans le module de connaissance (130) en fonction des mesures du module de mesure (110).

**2.** Système de surveillance selon l'une quelconque des revendications 1, dans lequel les paramètres de performance mesurés comprennent un ou plusieurs des éléments suivants :

- une utilisation de canaux ;
- un débit moyen de données.

**3.** Système de surveillance selon l'une quelconque des revendications 1 et 2, dans lequel le système de surveillance (100) est en outre configuré de sorte que :
pendant la phase de prédiction :

- le module de mesure (110) est configuré pour mesurer les paramètres de performance du canal de fonctionnement sans fil actuellement utilisé du point d'accès sans fil ;
- le module de mesure (110) est configuré pour surveiller des changements dans les paramètres de performance mesurés ;

- le module de mesure (110) est configuré pour déclencher le module d'estimation (140) pour initier lesdites estimations des paramètres de performance de canaux de fonctionnement sans fil de la pluralité de différents canaux de fonctionnement sans fil autres que le canal de fonctionnement sans fil actuellement utilisé par le point d'accès sans fil, si lesdits changements surveillés dans les paramètres de performance mesurés dépassent un seuil prédéterminé.

4. Système de surveillance selon l'une quelconque des revendications 1 à 3, dans lequel lesdites corrélations déterminées par le module de corrélation (120) comprennent un ou plusieurs des éléments suivants :

   - des corrélations spatiales ;
   - des corrélations spectrales ;
   - des corrélations temporelles.

5. Système de surveillance selon l'une quelconque des revendications 1 à 4, dans lequel le point d'accès sans fil (200) peut être couplé via une liaison backhaul (210) à un ou plusieurs amplificateurs de signaux sans fil (220), qui peuvent être couplés via une liaison fronthaul (230) à un ou plusieurs équipements d'utilisateur sans fil (240), et dans lequel le module de mesure (110) est en outre configuré pour mesurer également des paramètres de performance du canal de fonctionnement sans fil actuellement utilisé par les prolongateurs de signaux sans fil (220) et/ou les équipements d'utilisateur sans fil (240) sans interruption de service.

6. Procédé de surveillance pour surveiller le fonctionnement d'au moins un point d'accès sans fil, dans lequel le point d'accès sans fil fonctionne sur au moins l'un d'une pluralité de canaux de fonctionnement sans fil disponibles dans un réseau sans fil comprenant une pluralité de points d'accès sans fil, dans lequel le procédé comprend les étapes suivantes :
   pendant une phase d'apprentissage :

   - mesurer des paramètres de performance du canal de fonctionnement sans fil actuellement utilisé par le point d'accès sans fil sans interruption de service par un module de mesure et, si aucun utilisateur n'est connecté au point d'accès sans fil et/ou si des utilisateurs connectés au point d'accès sans fil utilisent des applications non en temps réel, mesurer également des paramètres de performance d'autres canaux de fonctionnement sans fil que celui actuellement utilisé par le module de mesure (110) ;
   - déterminer des corrélations entre les paramètres de performance mesurés d'une pluralité de différents canaux de fonctionnement sans fil par un module de corrélation, lorsque ladite pluralité de différents canaux de fonctionnement sans fil ont été mesurés par le module de mesure ; et
   - stocker lesdites corrélations dans un module de connaissance, et pendant une phase de prédiction :
   - estimer les performances de canaux de fonctionnement sans fil de la pluralité de différents canaux de fonctionnement sans fil autres que le canal de fonctionnement sans fil actuellement utilisé par le point d'accès sans fil au moyen de la récupération des corrélations stockées dans le module de connaissance en fonction des mesures du module de mesure.

7. Procédé de surveillance selon la revendication 6, dans lequel les paramètres de performance mesurés comprennent un ou plusieurs des éléments suivants :

   - une utilisation de canaux ;
   - un débit moyen de données.

8. Procédé de surveillance selon l'une quelconque des revendications 6 et 7, dans lequel le procédé comprend les étapes supplémentaires suivantes :
   pendant la phase de prédiction :

   - mesurer les paramètres de performance du canal de fonctionnement sans fil actuellement utilisé du point d'accès sans fil par le module de mesure ;
   - surveiller les changements dans les paramètres de performance mesurés ;
   - initier lesdites estimations des paramètres de performance de canaux de fonctionnement sans fil de la pluralité de différents canaux de fonctionnement sans fil autres que le canal de fonctionnement sans fil actuellement utilisé par le point d'accès sans fil, si lesdits changements surveillés dans les paramètres de performance mesurés dépassent un seuil prédéterminé.

9. Procédé de surveillance selon l'une quelconque des revendications 6 à 8, dans lequel lesdites corrélations déterminées par le module de corrélation comprennent un ou plusieurs des éléments suivants :

- des corrélations spatiales ;
- des corrélations spectrales ;
- des corrélations temporelles.

10. Procédé de surveillance selon l'une quelconque des revendications 6 à 9, dans lequel le point d'accès sans fil peut être couplé via une liaison backhaul à un ou plusieurs amplificateurs de signaux sans fil, qui peuvent être couplés via une liaison fronthaul à un ou plusieurs équipements d'utilisateur sans fil, et dans lequel le procédé comprend l'étape supplémentaire consistant à :

- mesurer des paramètres de performance du canal de fonctionnement sans fil actuellement utilisé par les prolongateurs de signaux sans fil et/ou les équipements d'utilisateur sans fil sans interruption de service par un module de mesure.

11. Produit de programme informatique comprenant des instructions exécutables par ordinateur amenant un système de surveillance à réaliser les étapes du procédé de l'une quelconque des revendications 6 à 9, lorsque les instructions sont exécutées sur un ordinateur associé au système de surveillance.

Fig. 1

Fig. 2

| Observation (current channel) $\delta R_i = \{\delta U_i, \delta C_i\}$ | Rewards of other channels $R_{j,j \neq i} = [\{U_j, C_j\}, \dots, \{U_N, C_N\}]$ |
|---|---|
| $\delta R_{i=1} = \{+0.5, 0\}$ | $R_{j,j \neq i} = [R_2, \dots, R_N]$ $= [\{0.5, 4\}, \dots, \{0.1, 2\}]$ |
| $\vdots$ | |
| $\vdots$ | |
| $\delta R_{i=N} = \{+0.3, +3\}$ | $R_{j,j \neq i} = [R_1, \dots, R_{N-1}]$ $= [\{0.2, 7\}, \dots, \{0.8, 4\}]$ |

130

## Fig. 3

High load

Ch 2

210

200 Ch 1

UE

AP

**Observe:** High utilization on Ch 1 and Ch 2
**Reason:** Contention between overlapping channels

Low load

Ch 2

210

200

Ch 1

UE

AP

**Observe:** Low utilization on Ch 1
**Reason:** Neighbor using an overlapping channel has less load

## Fig. 4

Fig. 5

Fig. 6

710 — | Measure currently used channel |

720 — | Determine correlations for other channels |

730 — | Store correlations in knowledge module |

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017006479 A

- KR 20070018779